# EUROPEAN PATENT APPLICATION

(11) **EP 4 160 808 A1**
(43) Date of publication of application: **05.04.2023**
(21) Application number: 22192549.8
(22) Date of filing: 29.08.2022
(51) Int. Cl.: H01M 50/471, H01M 10/0585, H01M 50/105, H01M 50/463

(54) **SECONDARY BATTERY AND METHOD OF MANUFACTURING THE SAME**

(30) Priority: 15.09.2021 KR 20210122906
(71) Applicant: SK On Co., Ltd., Seoul 03161 (KR)
(72) Inventor: LEE, Jong Hyeok, 34124 Daejeon (KR); JO, Yoon Ji, 34124 Daejeon (KR); HWANG, Chang Mook, 34124 Daejeon (KR)
(74) Representative: Prüfer & Partner mbB Patentanwälte · Rechtsanwälte

(57) **Abstract**

A secondary battery, includes: an electrode assembly; an electrode lead structure including an electrode lead bonded to an electrode tab of the electrode assembly and a molded portion surrounding the electrode lead; and a spacer inserted into a space between the electrode lead structure and the electrode assembly. According to the present disclosure, by removing a corner portion stress caused by forming and a stress from folding a pouch in a secondary battery assembly process including pouch forming, it is possible to minimize damage to the pouch and secure battery stability. In addition, by providing a secondary battery structure having a novel structure, it is possible to increase energy density by eliminating pouch cell thickness limitation due to pouch forming.

## Description

### CROSS-REFERENCE TO RELATED APPLICATION(S)

This application claims the benefit under 35 USC 119(a) of Korean Patent Application No. 10-2021-0122906 filed on September 15, 2021 in the Korean Intellectual Property Office, the entire disclosure of which is incorporated herein by reference for all purposes.

### BACKGROUND

The present disclosure relates to a secondary battery and a method of manufacturing the same, and to a secondary battery for minimizing damage to a pouch case, securing battery stability, and increasing energy density, and a manufacturing method thereof.

A secondary battery that can be charged and discharged is used as a driving power source for various devices such as mobile phones, notebook computers, smartphones, and the like, and the secondary battery may include a nickel-cadmium battery, a nickel-metal hydride battery, a nickel-hydrogen battery, a lithium secondary battery, and the like. Thereamong, the lithium secondary battery has an operating voltage of 3.6 V, three times greater than that of a nickel-cadmium battery or a nickel-metal hydride battery, so the lithium secondary battery is mainly used because of excellent characteristics of energy density per unit weight thereof. In addition, recent studies have been actively conducted to use a lithium secondary battery as a driving power source or power storage power source for a hybrid vehicle or a battery vehicle by using the characteristics having high energy density, and when used in such a medium-large device, a large number of secondary batteries are electrically connected to increase capacity and output.

The secondary battery may be classified as a pouch-type secondary battery, a can-type secondary battery, or the like, depending on a material of a case accommodating the electrode assembly. The pouch-type secondary battery accommodates the electrode assembly in a pouch formed of a flexible polymer material, and the can-type secondary battery accommodates the electrode assembly in a case made of a material such as metal, plastic, or the like.

A pouch, a case of the pouch-type secondary battery, is manufactured by performing press working on a pouch film having flexibility to form an accommodating unit in which an electrode assembly is accommodated. Then, when the accommodating unit is formed, an electrode assembly is accommodated in an accommodating space of the accommodating unit and a side is sealed to manufacture a secondary battery.

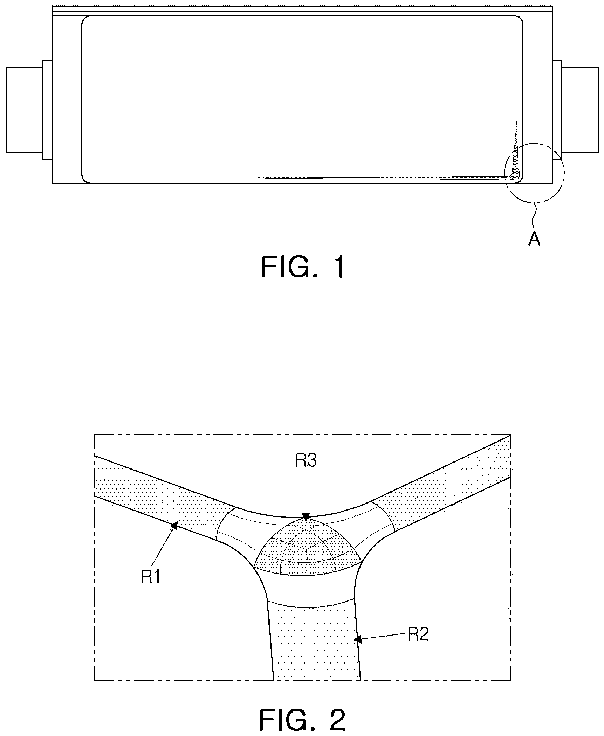

Among these press workings, drawing forming is performed by inserting a pouch film into a forming apparatus such as a pressing device, applying pressure to the pouch film with a punch, and stretching the pouch film. FIG. 1 illustrates portion (A) in which stress is concentrated during press forming of a pouch film. Since the pouch film is in a form of a film or a sheet having a fairly thin thickness, stress was concentrated at an edge and a corner when the pouch film was stretched. Therefore, there was a problem that cracks or whitening occurred in the pouch film.

In more detail, FIG. 2 is an enlarged perspective view illustrating a corner formed in a battery case according to the prior art and peripheral surfaces thereof, in the accommodating unit formed in the pouch-type battery case according to the prior art, R1 is a radius of curvature of a first punch edge, R2 is a radius of curvature of a second punch edge, and R3 is a radius of curvature of a first corner connecting the first punch edge and the second punch edge. As described above, when the pouch film is stretched, stress is concentrated and a thickness of the pouch film is reduced. In particular, since the corner is formed by meeting three edges, that is, two punch edges and one thick edge, the corner is stretched more than the punch edge or the thick edge, so that the stress is more concentrated than the punch edge or the thick edge. Therefore, since the pouch film is excessively stretched, durability is lowered in a region corresponding to the corner, and eventually cracks easily occur.

As described above, due to cracks occurring in a corner portion, a thickness of a pouch cell is limited according to elongation of the aluminum, so there are safety problems such as insulation and electrolyte leakage, and there are problems in increasing energy density, and also, when the pouch is folded during the assembly process, there is a possibility of forming a folded surface at the corner portion, resulting in dimensional instability, and damage to the pouch.

Therefore, in manufacturing a pouch-type secondary battery, there is a need to develop a technology for a structure and a manufacturing method of a secondary battery that can solve these problems.

### SUMMARY

An aspect of the present disclosure is to provide a secondary battery with a novel structure, to minimize pouch forming, and to provide a secondary battery capable of realizing stability and simplification of a structure of the secondary battery and a method for manufacturing the same.

According to an aspect of the present disclosure, a secondary battery includes: an electrode assembly; an electrode lead structure including an electrode lead bonded to an electrode tab of the electrode assembly and a molded portion surrounding the electrode lead; and a spacer inserted into a space between the electrode lead structure and the electrode assembly.

The molded portion may include at least one polymer selected from a group consisting of polypropylene, polyethylene, polyimide, and polyethylene terephthalate.

The molded portion may include a polypropylene layer in an outermost portion.

The molded portion may include a gas collection member therein.

The molded portion may include a venting member therein.

The molded portion may include an electrolyte injection member therein.

The molded portion of the electrode lead structure may have a height of -2 mm to 2 mm compared to a height of the electrode assembly.

The spacer may include at least one polymer selected from a group consisting of polypropylene, polyethylene, polyimide, and polyethylene terephthalate.

The spacer may include a polypropylene layer in an outermost portion.

The spacer may be formed to have a shape corresponding to a space between the electrode lead structure and the electrode assembly.

The spacer may have a height of -2 mm to 2 mm compared to the height of the electrode assembly.

The spacer may be formed in plural.

The plurality of spacers may be embossed or engraved with shapes corresponding to each other.

The spacer may include an empty space therein.

The spacer may include a gas collection member therein.

The spacer may include an electrolyte storage member therein.

The bonded electrode lead and the electrode tab may be bent.

The electrode lead structure may be one in which polypropylene is coated on the electrode lead.

According to another aspect of the present disclosure, an operation of manufacturing a secondary battery, includes: an operation of providing an electrode assembly; an operation of bonding an electrode lead structure including an electrode lead and a polymer resin surrounding the electrode lead, and an electrode tab of the electrode assembly; and an operation of inserting a spacer into a space between the electrode lead structure and the electrode assembly to manufacture a secondary battery structure.

The secondary battery structure may have a rectangular parallelepiped shape in which electrode leads protrude externally.

After the operation of manufacturing the secondary battery structure, an operation of packaging a secondary battery structure with a pouch film may be further included.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 schematically illustrates portion (A) on which stress is concentrated during press processing of a pouch film of a pouch-type secondary battery.
FIG. 2 is an enlarged perspective view of a corner formed in a battery case and surroundings thereof according to the prior art.
FIGS. 3 to 7 schematically illustrate a method of manufacturing a secondary battery according to an embodiment of the present disclosure.
FIGS. 8A and 8B are a side view of a secondary battery according to an embodiment of the present disclosure.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent to one of ordinary skill in the art. The sequences of operations described herein are merely examples, and are not limited to those set forth herein, but may be changed, as will be apparent to one of ordinary skill in the art, with the exception of operations necessarily occurring in a certain order. Also, descriptions of functions and constructions that would be well known to one of ordinary skill in the art may be omitted for increased clarity and conciseness.

The terminology used herein describes particular embodiments only, and the present disclosure is not limited thereby. As used herein, the singular forms "a," "an," and "the" are intended to include the plural forms as well, unless the context clearly indicates otherwise. It will be further understood that the terms "including", "comprises," and/or "comprising" when used in this specification, specify the presence of stated features, integers, steps, operations, members, elements, and/or groups thereof, but do not preclude the presence or addition of one or more other features, integers, steps, operations, members, elements, and/or groups thereof.

Throughout the specification, it will be understood that when an element, such as a layer, region or wafer (substrate), is referred to as being "on," "connected to," or "coupled to" another element, it may be directly "on," "connected to," or "coupled to" the other element or other elements intervening therebetween may be present. In contrast, when an element is referred to as being "directly on," "directly connected to," or "directly coupled to" another element, there may be no elements or layers intervening therebetween. Like numerals refer to like elements throughout. As used herein, the term "and/or" includes any and all combinations of one or more of the associated listed items.

The drawings may not be to scale, and the relative size, proportions, and depiction of elements in the drawings may be exaggerated for clarity, illustration, and convenience.

Hereinafter, exemplary embodiments will be described with reference to various examples. However, embodiments of the present disclosure may be modified in various other forms, and the scope of the present disclosure is not limited to the embodiments described below.

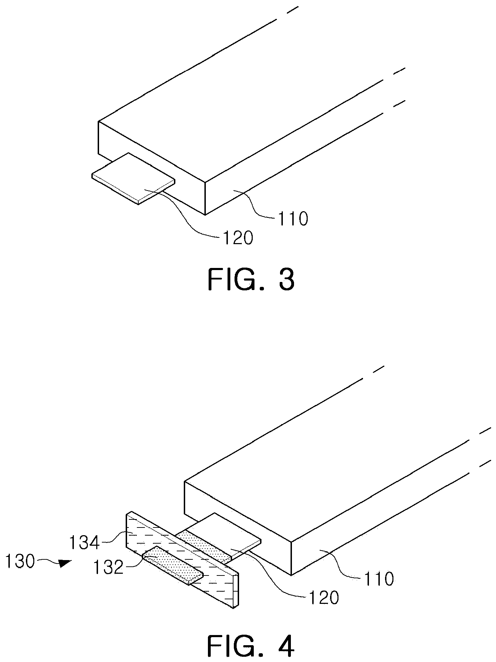

The present disclosure relates to a secondary battery and a method of manufacturing the same, and to a secondary battery capable of minimizing damage to a pouch case, securing battery stability, and increasing energy density, and a manufacturing method thereof. FIGS. 3 to 7 schematically illustrate a method of manufacturing a secondary battery according to an embodiment of the present disclosure. Hereinafter, the present disclosure will be described in more detail with reference to FIGS. 3 to 7.

According to an aspect of the present disclosure, a secondary battery includes: an electrode assembly 110; an electrode lead structure 130 including an electrode lead 132 bonded to an electrode tab 120 of the electrode assembly 110 and a molded portion 134 surrounding the electrode lead 132; and a spacer 140 inserted into a space between the electrode lead structure 130 and the electrode assembly 110.

FIG. 3 schematically illustrates an electrode assembly 110 according to an embodiment of the present disclosure. In the present disclosure, a shape of the electrode assembly 110 is not limited to the example illustrated in FIG. 3, and may be formed in various shapes such as a rectangular parallelepiped, or the like.

The electrode assembly may include a positive electrode, a positive electrode tab, a negative electrode, a negative electrode tab, and a separator interposed between the positive electrode and the negative electrode. All known electrode assemblies may be applied to the electrode assembly. For example, the positive electrode may use a thin plate made of aluminum, stainless steel, or nickel as a current collector, and it is preferable to use a thin plate made of aluminum. In addition, a porous body having a net or mesh shape may be used, and may be coated with an oxidation-resistant metal or alloy film to prevent oxidation.

The positive electrode active material is a compound capable of reversible intercalation and deintercalation of lithium, and any positive electrode active material used in the art may be applied without limitation. For example, the positive electrode active material may include a lithium transition metal composite oxide containing at least one transition metal consisting of nickel, cobalt, manganese and aluminum and lithium, a lithium transition metal composite oxide containing transition metal containing nickel, cobalt, and manganese and lithium, and a positive electrode active material such as LiFePO₄(LFP)having an olivine structure.

A binder may be additionally included in order to improve binding of an active material, a conductive material, and the like, and adhesion to a current collector, and specifically, the binder may include at least one of polyvinylidene fluoride, polyvinyl alcohol, carboxymethyl cellulose (CMC), starch, hydroxypropylcellulose, regenerated cellulose, polyvinylpyrrolidone, tetrafluoroethylene, polyethylene, polypropylene, ethylene-propylene-diene ether polymer (EPDM), sulfonated EPDM, styrene-butadiene rubber and fluororubber, and preferably, polyvinylidene fluoride.

The positive electrode may further include one or more conductive materials selected from a group consisting of graphite, carbon black, carbon nanotubes, metal powder, and conductive oxides, to improve conductivity.

A negative electrode is a current collector, and as the negative electrode, copper, stainless steel, aluminum, nickel, titanium, calcined carbon, one in which a surface of copper or stainless steel is surface-treated with carbon, nickel, titanium, silver, or the like, an aluminum-cadmium alloy, and the like, may be used. In addition, like the positive electrode current collector, bonding strength of the negative electrode active material may be strengthened by forming fine irregularities on a surface thereof, and may be used in various forms such as a film, sheet, foil, net, porous body, foam, non-woven body, and the like.

The negative active material may be a silicon-based negative active material and a carbon-based negative active material. Although not particularly limited, the silicon-based negative active material may be at least any one selected from a group consisting of SiOx (0≤x<2) particles, a Si-C composite, and a Si-Y alloy (where Y is an alkali metal, alkaline earth metal, transition metal, group 13 element, group 14 elements, rare earth elements, and combinations thereof), and for example, SiO. The carbon-based negative active material may be, for example, at least one selected from a group consisting of artificial graphite, natural graphite, and graphitized mesocarbon microbeads, and is preferably artificial graphite.

The negative electrode mixture layer may also include a binder and a conductive material. The binder may include an aqueous binder and a rubber-based binder, and the aqueous binder may be dissolved in an aqueous solvent such as water, or the like, and may include at least one selected from a group consisting of polyvinyl alcohol (PVA: polyvinyl alcohol), polyacrylic acid (PAA: polyacrylic acid), polyethylene glycol (PEG). : polyethylene glycol), polyacrylonitrile (PAN: polyacrylonitrile) and polyacryl amide (PAM: polyacryl amide), and carboxylmethyl cellulose (CMC: carboxylmethyl cellulose). The rubber-based binder does not dissolve well in aqueous solvents such as water, or the like, but may be defined as being able to be smoothly dispersed in an aqueous solvent. Specifically, the rubber-based binder may include at least one selected from styrene butadiene rubber (SBR), hydrogenated nitrile butadiene rubber (HNBR), acrylonitrile butadiene rubber, acrylic rubber, butyl rubber, and fluoro rubber, and preferably, include at least one selected from a group consisting of styrene-butadiene rubber and hydrogenated nitrile-butadiene rubber, more preferably styrene-butadiene rubber, in terms of easy dispersion and excellent phase stability.

The conductive material may be at least one selected from a group consisting of graphite, carbon black, carbon nanotubes, metal powder, and conductive oxides.

In addition, any separator recognized in the art may be applied as a separator. The separator is a physical separator having a function of physically separating electrodes, and can be used without any particular limitation as long as it is used as a conventional separator, and in particular, preferably, a separator having low resistance to ion movement of the electrolyte and having excellent electrolyte moisture content may be used. The separator separates or insulates a positive electrode and a negative electrode from each other and enables transport of lithium ions between the positive electrode and the negative electrode. Such a separator may be made of a porous, nonconductive or insulating material. The separator may be an independent member such as a film, or a coating layer added to the positive electrode and/or the negative electrode.

Examples of a polyolefin-based porous membrane that can be used as the separator may be a membrane formed of a membrane formed by mixing a polyolefin-based polymer such as polyethylene such as high-density polyethylene, linear low-density polyethylene, low-density polyethylene, and ultrahigh molecular weight polyethylene, polypropylene, polybutylene, polypentene, and the like, either alone or as a mixture of these polymers, respectively.

Meanwhile, the electrode assembly may be an electrode assembly for various types of batteries, such as a lithium-sulfur battery and an all-solid-state battery, and is not particularly limited.

For example, in the case of an electrode assembly of an all-solid-state battery, the electrode assembly may include a positive electrode, a negative electrode, and a solid electrolyte layer interposed between the positive electrode and the negative electrode, and the positive electrode, the negative electrode and the solid electrolyte may be applied without limitation as long as they are used in the art. The positive electrode, as a positive electrode active material, a layered compound such as lithium manganese composite oxide, lithium cobalt oxide, or lithium nickel oxide, or a compound substituted with one or more transition metals; lithium manganese oxide; lithium copper oxide; vanadium oxide; Ni site-type lithium nickel oxide; disulfide compounds, and the like, may be applied without limitation. The negative electrode, as a negative electrode active material, carbon such as lithium metal oxide, non-graphitizable carbon, graphite-based carbon; metal complex oxide; lithium metal; lithium alloy; silicon-based alloys; tin-based alloys; metal oxides; conductive polymers such as polyacetylene; Li-Co-Ni-based materials; titanium oxide, and the like may be applied without limitation. In addition, the solid electrolyte may include a crystalline solid electrolyte, an amorphous solid electrolyte, an inorganic solid electrolyte such as a glass-ceramic solid electrolyte, and the like, and the solid electrolyte may be a sulfide-based solid electrolyte. Examples of such a sulfide-based solid electrolyte may be lithium sulfide, silicon sulfide, germanium sulfide, boron sulfide, and the like.

Meanwhile, the tab is respectively connected to the positive electrode and the negative electrode of the electrode assembly, and protrudes externally of the electrode assembly, and serves as a path through which electrons can move between the inside and the outside of the electrode assembly. An electrode current collector of the electrode assembly is comprised of a portion to which an electrode active material is applied and a distal portion to which an electrode active material is not applied, that is, an uncoated portion. The tab may be formed by cutting the uncoated portion or may be formed by connecting a separate conductive member to the uncoated portion by ultrasonic welding, or the like. The tab may protrude side by side from one side of the electrode assembly in the same direction, but are not limited thereto and may protrude in different directions, respectively.

A secondary battery according to an embodiment of the present disclosure includes an electrode lead structure 132 including an electrode lead 132 bonded to an electrode tab 120 of the electrode assembly 110 and a molded portion 134 surrounding the electrode lead 132. FIG. 4 schematically illustrates an electrode lead structure 130 and a structure in which the electrode lead structure 130 and the electrode assembly 110 are bonded according to an embodiment of the present disclosure.

The electrode lead 132 may include a positive electrode lead and a negative electrode lead, and a material of the positive electrode lead and the negative electrode lead may be different from each other. For example, the positive electrode lead may be made of the same aluminum (Al) material as a positive electrode current collector, and the negative electrode lead may be made of the same copper (Cu) material as a negative electrode current collector or nickel (Ni) coated copper. The electrode tab 120 of the electrode assembly 110 and the electrode lead 132 of the electrode lead structure 130 may be bonded to each other by, for example, spot welding, or the like, so that electricity can be supplied externally of the secondary battery.

Meanwhile, the electrode lead structure 130 of the present disclosure may include a molded portion 134 surrounding the electrode lead 132. The molded portion 134 may implement a shape of the secondary battery, and serve to protect the electrode assembly from external environments according to a manufacturing method as will be described later. In addition, the molded portion 134 may have an empty space therein, and may include at least one selected from a group consisting of a gas collection member, a venting member, and an electrolyte injection member therein. The gas collection member, the venting member, and the electrolyte injection member will be described later. As described above, in the present disclosure, by utilizing an internal space of the molded portion 134, the performance of the secondary battery may be further improved.

Meanwhile, the molded portion 134 may be applied without limitation as long as it is a polymer capable of providing appropriate mechanical strength to a secondary battery cell, and may include, for example, one or more polymers selected from a group consisting of polypropylene, polyethylene, polyimide, and polyethylene terephthalate, preferably polypropylene.

According to a preferred embodiment of the present disclosure, an outermost portion of the molded portion 134, that is, a portion in contact with a pouch film afterward, may preferably include a polypropylene layer for thermal fusion with the pouch film.

A height of the molded portion 134 of the electrode lead structure 130 may have a height of-2 mm to 2 mm as compared to the height of the electrode assembly 110, and is preferably formed at substantially the same level. Accordingly, by making the height of the secondary battery structure manufactured accordingly uniform, packaging and handling of the secondary battery manufactured accordingly can be made easier. In addition, a portion of the molded portion 134 may have a curvature or may include an inclined structure. For example, a corner of the molded portion 134 on a side from which the electrode lead protrudes may be formed to have a constant curvature.

Meanwhile, according to another embodiment of the present disclosure, the electrode lead structure may be one in which polypropylene is coated on the electrode lead.

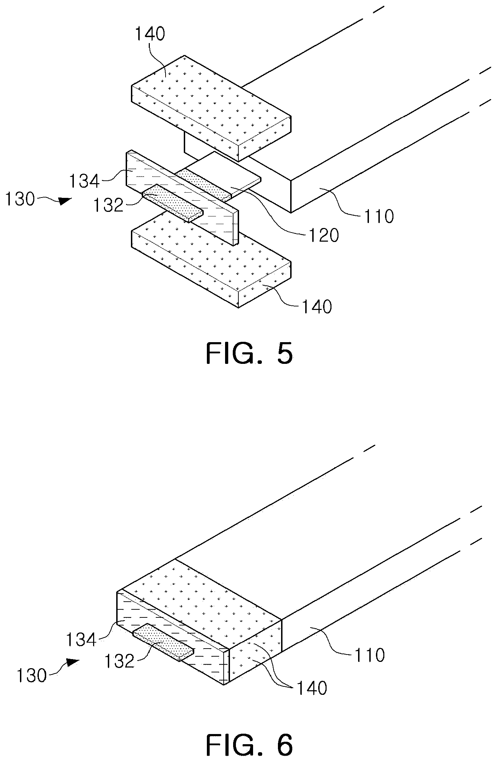

The secondary battery according to the present disclosure may include a spacer 140 inserted into a space between the electrode lead structure 130 and the electrode assembly 110. FIG. 5 schematically illustrates a structure in which the spacer 140 is inserted into the space between the electrode lead structure 130 and the electrode assembly 110 according to an embodiment of the present disclosure.

The spacer 140 may include an insulating material that does not react with an electrolyte, for example, at least one polymer selected from a group consisting of polypropylene, polyethylene, polyimide, and polyethylene terephthalate.

In addition, the spacer 140 may function to prevent electrical interference or an electrical short circuit between the electrode assembly 110 and the molded portion 134 of the electrode lead structure 130, and the spacer 140 may secure an appropriate space between the electrode assembly 110 and the molded portion 134 of the electrode lead structure 130, such that insulation may be secured even in an environment to which an external impact is applied.

In addition, the outermost portion of the spacer 140, that is, a portion in contact with a pouch film thereafter, preferably includes a polypropylene layer for thermal fusion with the pouch film.

Meanwhile, the spacer 140 may have a shape corresponding to the space between the electrode lead structure 130 and the electrode assembly 110. As illustrated in FIG. 5, a spacer 140 having a shape corresponding to the space between the electrode lead structure 130 and the electrode assembly 110 may be inserted.

Although not particularly limited, a height of the spacer 140 may be -2 mm to 2 mm compared to the height of the electrode assembly 110, and is preferably formed at the same level as the height of the electrode assembly. By setting the height of the molded portion 134 of the electrode lead structure 130, the electrode assembly 110, and the spacer 140 at the same level, the height of the manufactured secondary battery structure may be uniform, and packaging and handling of the secondary battery manufactured accordingly may be made easier.

According to another embodiment of the present disclosure, the spacer 140 may be formed in plural, and may be embossed or engraved with shapes corresponding to each other. For example, as illustrated in FIG. 5, the spacer 140 may include an upper spacer and a lower spacer having a shape corresponding to a space between the electrode lead structure 130 and the electrode assembly 110, and by inserting them into the space to form a rectangular parallelepiped secondary battery structure. As described above, by configuring the spacer in plural, fairness in manufacturing the secondary battery can be further improved.

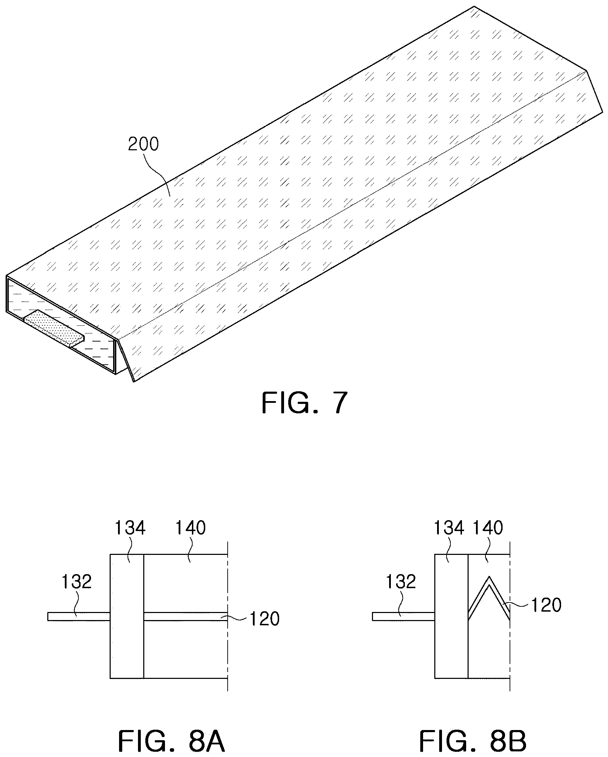

FIG. 8 is a schematic diagram of a secondary battery according to an embodiment of the present disclosure. According to another embodiment of the present disclosure, there is provided a secondary battery in which the bonded electrode lead and the electrode tab are bent, and accordingly, the spacer may also be inserted into the space between the electrode lead structure and the electrode assembly to correspond to the bent shape. Referring to FIG. 8, FIG. 8A schematically illustrates a secondary battery in which the bonded electrode lead and the electrode tab are not bent, and FIG. 8B schematically illustrates a secondary battery in which the bonded electrode lead and the electrode tab are bent. As can be seen in FIG. 8B, according to the bent shape, the spacer is inserted into the space between the electrode lead structure and the electrode assembly, and in this manner, when the bonded electrode lead and the electrode tab are bent, the space into which the spacer is inserted may be further reduced, thereby reducing a dead space.

Meanwhile, the spacer 140 may include an empty space therein while maintaining insulation. According to a preferred embodiment of the present disclosure, the performance of the secondary battery may be further improved by utilizing the empty space.

For example, the spacer 140 may include a gas collection member capable of collecting gas from the secondary battery cell therein. Various types of gases such as hydrogen, oxygen, nitrogen, carbon monoxide, carbon dioxide, hydrocarbons and other organic gas species may be generated according to a reaction in the secondary battery, and most of the gases generated inside the secondary battery are carbon monoxide and carbon dioxide. Accordingly, in the present disclosure, the spacer 140 may include a gas collection member capable of collecting carbon monoxide and carbon dioxide gas such as calcium carbonate, potassium carbonate and sodium hydroxide in an empty space therein, and a moisture absorbent such as silica gel, zeolite, and the like, may be further included. Since moisture is a major factor causing side reactions inside the secondary battery, it is preferable to additionally include a moisture absorbent because moisture generated together with gas may be removed to more effectively prevent deterioration of battery performance.

According to another embodiment of the present disclosure, the spacer 140 may include a venting member capable of venting gas therein. The venting member is not particularly limited, and may include, for example, a venting means that opens and closes a passage for discharging gas from an inside of the pouch in conjunction with internal pressure of the pouch, or opens when the internal pressure of the pouch reaches critical pressure.

According to another embodiment of the present disclosure, the spacer 140 may include an electrolyte storage member therein. A secondary battery is manufactured by impregnating a non-aqueous electrolyte with a lithium salt such as LiPF₆ or the like, during charging, lithium ions from the positive electrode active material are released and inserted into a carbon layer of the negative electrode, and during discharging, lithium ions from the carbon layer are released and inserted into the positive electrode active material. The non-aqueous electrolyte serves as a medium for moving lithium ions between the negative electrode and the positive electrode. However, the electrolyte is continuously consumed due to side reactions at the negative electrode and oxidation at the positive electrode between operations of the secondary battery. Accordingly, if a content of the electrolyte is too small, desired electrochemical performance cannot be exhibited while a lifespan of the secondary battery may be rapidly reduced.

Accordingly, in the present disclosure, the spacer 140 may include an electrolyte storage member containing an electrolyte in an empty space therein, and an electrolyte consumed by repeated use of the secondary battery may be supplemented to maintain the performance of the secondary battery. Although not particularly limited, the electrolyte storage member may be formed of a hygroscopic material that absorbs and stores the electrolyte, and may include, for example, one selected from a group consisting of polyethylene, polypropylene, polyvinylidene fluoride-based material, and polyurethane. The electrolyte storage member is preferably formed of a foamed structure, and may supply an electrolyte impregnated by a change in pressure inside the cell.

According to another aspect of the present disclosure, a method of manufacturing a secondary battery is provided. The method of manufacturing a secondary battery includes: an operation of providing an electrode assembly 110; an operation of bonding an electrode lead structure 130 including an electrode lead and a polymer resin surrounding the electrode lead and an electrode tab 120 of the electrode assembly 110; and an operation of inserting a spacer 140 into a space between the electrode lead structure 130 and the electrode assembly 110 to manufacture a secondary battery structure. Since each component and their coupling relationship have been described above, a detailed description thereof will be omitted herein.

Although not particularly limited, the secondary battery structure may have a rectangular parallelepiped shape in which electrode leads protrude externally. FIG. 6 schematically illustrates a secondary battery structure according to an embodiment of the present disclosure, and illustrates a rectangular parallelepiped secondary battery structure manufactured by coupling the electrode assembly 110, the electrode lead structure 130, and the spacer 140. As described above, by setting heights of the molded portion 134 of the electrode lead structure 130, the electrode assembly 110, and the spacer 140 the same to make a height of the manufactured secondary battery structure uniform, a subsequent packaging of the secondary battery and handling of the secondary battery manufactured accordingly can be made easier.

Meanwhile, after the operation of manufacturing the secondary battery structure, an operation of packaging a secondary battery structure with a pouch film 200 may be further included. FIG. 7 schematically illustrates a shape in which a secondary battery structure is packaged with a pouch film 200, and in more detail, in the packaging operation, the secondary battery structure may be enclosed with a single pouch film and then thermocompressed, or enclosed with upper and lower pouch films, then wrapped around the secondary battery structure and then thermocompressed, to be packaged as a pouch film.

As described above, according to the present disclosure, since drawing molding performed on the pouch film is not required to form an accommodating unit in which the secondary battery is accommodated, there is no risk of cracks occurring in the pouch film, and accordingly, there is an effect in which stability of the secondary battery may be further improved. In addition, since there is no risk of cracks occurring in the pouch film, in order to avoid occurring cracks, it is not necessary to limit a thickness of a secondary battery cell, in consideration of an elongation of aluminum constituting the pouch film, since an element of limiting the thickness of the secondary battery cell may be removed, there is an effect of further improving energy density of the secondary battery.

While this disclosure includes specific examples, it will be apparent to one of ordinary skill in the art that various changes in form and details may be made in these examples without departing from the spirit and scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed to have a different order, and/or if components in a described system, architecture, device, or circuit are combined in a different manner, and/or replaced or supplemented by other components or their equivalents. Therefore, the scope of the disclosure is defined not by the detailed description, but by the claims and their equivalents, and all variations within the scope of the claims and their equivalents are to be construed as being included in the disclosure.

## Claims

1. A secondary battery, comprising:
an electrode assembly;
an electrode lead structure including an electrode lead bonded to an electrode tab of the electrode assembly and a molded portion surrounding the electrode lead; and
a spacer inserted into a space between the electrode lead structure and the electrode assembly.

2. The secondary battery of claim 1, wherein the molded portion comprises at least one polymer selected from a group consisting of polypropylene, polyethylene, polyimide, and polyethylene terephthalate.

3. The secondary battery of claim 1 or 2, wherein a gas collection member is included inside the molded portion.

4. The secondary battery of anyone of claims 1 to 3, wherein a venting member is included inside the molded portion.

5. The secondary battery of anyone of the preceding claims, wherein an electrolyte injection member is included inside the molded portion.

6. The secondary battery of anyone of the preceding claims, wherein the molded portion of the electrode lead structure has a height of -2 mm to 2 mm compared to a height of the electrode assembly.

7. The secondary battery of anyone of the preceding claims, wherein the spacer comprises at least one polymer selected from a group consisting of polypropylene, polyethylene, polyimide, and polyethylene terephthalate.

8. The secondary battery of anyone of the preceding claims, wherein the spacer has a height of -2 mm to 2 mm compared to the height of the electrode assembly.

9. The secondary battery of anyone of the preceding claims, wherein the spacer comprises an empty space therein.

10. The secondary battery of anyone of the preceding claims, wherein the spacer comprises a gas collection member therein.

11. The secondary battery of anyone of the preceding claims, wherein the spacer comprises a venting member.

12. The secondary battery of anyone of the preceding claims, wherein the spacer comprises an electrolyte storage member therein.

13. The secondary battery of anyone of the preceding claims, wherein the bonded electrode lead and electrode tab are bent.

14. A manufacturing method of a secondary battery, comprising:
an operation of providing an electrode assembly;
an operation of bonding an electrode lead structure including an electrode lead and a polymer resin surrounding the electrode lead and an electrode tab of the electrode assembly; and
an operation of inserting a spacer in a space between the electrode lead structure and the electrode assembly to manufacture a secondary battery structure.

15. The manufacturing method of claim 14, further comprising an operation of packaging a secondary battery structure with a pouch film, after the operation of manufacturing the secondary battery structure.
